# EUROPEAN PATENT APPLICATION

(11) **EP 3 683 107 A1**
(43) Date of publication of application: **22.07.2020**
(21) Application number: 18856322.5
(22) Date of filing: 27.04.2018
(51) Int. Cl.: B60S 5/06

(54) **VEHICLE POSITION ADJUSTING APPARATUS**

(30) Priority: 12.09.2017 CN 201710819397
(71) Applicant: Nio Co., Ltd., Shanghai 201804 (CN)
(72) Inventor: BENGTSSON, Jan, Jiading Shanghai 201804 (CN); LI, Nan, Jiading Shanghai 201804 (CN); TIAN, Xiaotao, Jiading Shanghai 201804 (CN); DING, Xikun, Jiading Shanghai 201804 (CN); MA, Yongyue, Jiading Shanghai 201804 (CN)
(74) Representative: Vossius & Partner Patentanwälte Rechtsanwälte mbB
(86) International application number: PCT/CN2018/084888
(87) International publication number: WO 2019/052190

(57) **Abstract**

A vehicle positioning adjustment device, comprising an adjustment mechanism (1) and a floating mechanism (2), with a travelling direction being an X-axis direction, wherein the adjustment mechanism (1) is in contact with a first support point of a vehicle for driving the first support point to move in the X-axis direction so as to drive the vehicle to move; and the floating mechanism (2) is in contact with a second support point of the vehicle for floating in a horizontal plane along with the movement of the vehicle so as to adjust the position of the vehicle. The device has a simple structure and is easy and convenient to operate. By means of providing the floating mechanism, the number of electric motors can be reduced, and four-point synchronism and coordination are improved. The floating mechanism has a large amount of floating, can bear a heavy load, is restorable, can be locked in position, and can be combined with the adjustment mechanism to adjust the position of the vehicle so as to improve the vehicle positioning precision, thereby improving the accuracy and efficiency of battery swapping for vehicles.

## Description

### Technical Field

The invention relates to the technical field of battery swapping for an electric vehicle, and in particular to a vehicle positioning adjustment device.

### Background Art

With the popularization of electric vehicles, how to provide electric energy replenishment for an electric vehicle with insufficient electric power in time and efficiently has become a major concern for both manufacturers and vehicle owners. By means of the establishment of a battery swap system for battery swapping of the electric vehicle, i.e., directly swapping a completely drained traction battery for a fully charged traction battery, the replenishment of electric energy can be completed within minutes, such that battery swapping is a very efficient way for replenishing electric energy.

During battery swapping by using the battery swap system, a vehicle needs to enter a hoisting mechanism that hoists the vehicle to perform battery swapping, and in this process. the vehicle needs to be placed in a battery swap position. The existing hoisting device, such as a four-column hoister, enters a preset position by a ramp with a particular width and a long pedal, and an X-axis limiting board is used at an end. However, such a method has a large positioning error, the position of the vehicle cannot be precisely adjusted, and the purpose of automatic battery swapping cannot be implemented.

### Summary of the Invention

The technical problem to be resolved by the invention is to provide a vehicle positioning adjustment device, which can perform precise vehicle positioning adjustment and correct an oblique position of the vehicle body, thereby improving the accuracy and efficiency of automatic battery swapping.

To solve the foregoing technical problem, the invention provides a vehicle positioning adjustment device, comprising:
an adjustment mechanism and a floating mechanism, with a travelling direction being an X-axis direction, wherein
the adjustment mechanism is in contact with a first support point of a vehicle for driving the first support point to move in the X-axis direction so as to drive the vehicle to move; and
the floating mechanism is in contact with a second support point of the vehicle for floating in a horizontal plane along with the movement of the vehicle so as to adjust the position of the vehicle.

Further, a plurality of adjustment mechanisms are provided and are respectively arranged on two sides of the vehicle in a vehicle width direction, each of the adjustment mechanisms corresponding to one first support point;
a plurality of floating mechanisms are provided and respectively arranged on the two sides of the vehicle in the vehicle width direction, each of the floating mechanisms corresponding to one second support point; and
the adjustment mechanism and the floating mechanism disposed on one same side of the vehicle are arranged in the X-axis direction.

Further, the device further comprises several lifting arms that respectively correspond to the adjustment mechanism and the floating mechanism and support the corresponding adjustment mechanism and floating mechanism.

Further, the adjustment mechanism comprises a driving portion, a linear movement portion, and a first bottom mounting plate, wherein
the driving portion and the first bottom mounting plate are disposed on the lifting arms, and the linear movement portion is disposed on the first bottom mounting plate and is connected to the driving portion;
the driving portion is used to drive the linear movement portion to move forward or backward in a linear direction; and
the linear movement portion is used to drive the corresponding support point to move forward or backward in the linear direction.

Further, the linear movement portion comprises a driving plate, a linear guide rail, a linear slider, a lead screw nut, and a lead screw, wherein the driving plate is connected to the linear slider and the lead screw nut, the lead screw and the linear guide rail are disposed on the first bottom mounting plate, and the lead screw is connected to the driving portion; and
the driving portion drives the lead screw to rotate, the lead screw pushes the lead screw nut to move back and forth, and the lead screw nut drives the driving plate to move back and forth, so as to drive corresponding support point of the vehicle to move back and forth.

Further, the adjustment mechanism further comprises a control module for communicating with the driving portion to output a corresponding position adjustment instruction to the driving portion.

Further, the control module comprises:
a photographing unit for photographing a positioning hole of a vehicle body and a positioning pin of a battery swap trolley to obtain photographic data;
a computing unit for computing a current position deviation of the vehicle relative to a preset position according to the photographic data; and
a fine adjustment unit for outputting a corresponding position adjustment instruction to the driving portion according to the obtained position deviation of the vehicle.

Further, the floating mechanism comprises:
a floating portion, a support portion, and a restoring portion, wherein
the floating portion is in rolling contact with the support portion by means of universal balls, such that the floating portion is supported by the support portion to float in the horizontal plane relative to the support portion; and
the restoring portion is connected to the floating portion for restoring the floating portion.

Further, the floating portion comprises a connecting post, and a first floating plate and a second floating plate which are respectively connected to two ends of the connecting post and are parallel to each other;
the support portion is provided with a through hole for the connecting post to pass through, the first floating plate and the second floating plate are respectively located outside the through hole and are in rolling contact with the support portion by means of the universal balls, and a floating gap is provided between the connecting post and a through-hole wall; and
at least one of the first floating plate and the second floating plate is provided with the restoring portion.

Further, the floating mechanism further comprises a second bottom mounting plate, the support portion is fixedly connected to the second bottom mounting plate, and one end of the restoring portion is connected to the second bottom mounting plate, and the other end thereof is connected to the second floating plate.

Further, the second bottom mounting plate is provided with a plurality of catching pin in a circumferential direction of the second floating plate, the second floating plate is provided with a plurality of catching holes in the circumferential direction, the catching pins correspond to the catching holes on a one-to-one basis, and one end of the restoring portion is connected to the catching pin, and the other end thereof is connected to the corresponding catching hole.

Further, the floating mechanism further comprises a locking portion, which is disposed between the first floating plate and the second bottom mounting plate for tightly locking the floating mechanism.

According to another aspect of the invention, provided is a battery swap system comprising the vehicle positioning adjustment device.

The invention has obvious advantages and beneficial effects as compared with the prior art. By means of the foregoing technical solution, the vehicle positioning adjustment device of the invention can achieve considerable technical progress and practicality, has a wide range of industrial utility value, and has at least the following advantages:
(1) the device has a simple structure and is easy and convenient to operate;
(2) the device can precisely adjust an X-axis position of a vehicle and correct an oblique position of the vehicle body;
(3) by means of providing the floating mechanism, the number of electric motors can be reduced, and four-point synchronism and coordination are improved; and
(4) the floating mechanism has a large amount of floating, can bear a heavy load, is restorable, can be locked in position, and can cooperate with the adjustment mechanism to adjust the position of the vehicle so as to improve the positioning precision.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief description of the Drawings

Fig. 1 is a schematic top view of a vehicle positioning adjustment device provided in one embodiment of the invention.
Fig. 2 is a three-dimensional schematic view of a vehicle positioning adjustment device provided in one embodiment of the invention.
Fig. 3 is a partial enlarged side view of the vehicle positioning adjustment device shown in Fig. 2.
Fig. 4 is a partial enlarged view of an adjustment mechanism in Fig. 3.
Fig. 5 is a sectional view of a floating mechanism in Fig. 3 along A-A.
Fig. 6 is an exploded view of a floating mechanism.

**[Reference numerals]**

| | | |
|---|---|---|
| 1: Adjustment mechanism | 2: Floating mechanism | 3: Lifting arm |
| 4: Support circular surface | 11: Driving portion | 12: Linear movement portion |
| 13: First bottom mounting plate | 21: Floating portion | 22: Support portion |
| 23: Restoring portion | 26: Second bottom mounting plate | 29: Locking portion |

### Detailed Description of Embodiments

In order to further illustrate the technical means used to achieve the intended purpose of the invention and the technical effects of the invention, the implementation of a vehicle positioning adjustment device proposed in the invention and the effects thereof are described in detail hereinafter in conjunction with the accompanying drawings and the preferred embodiments.

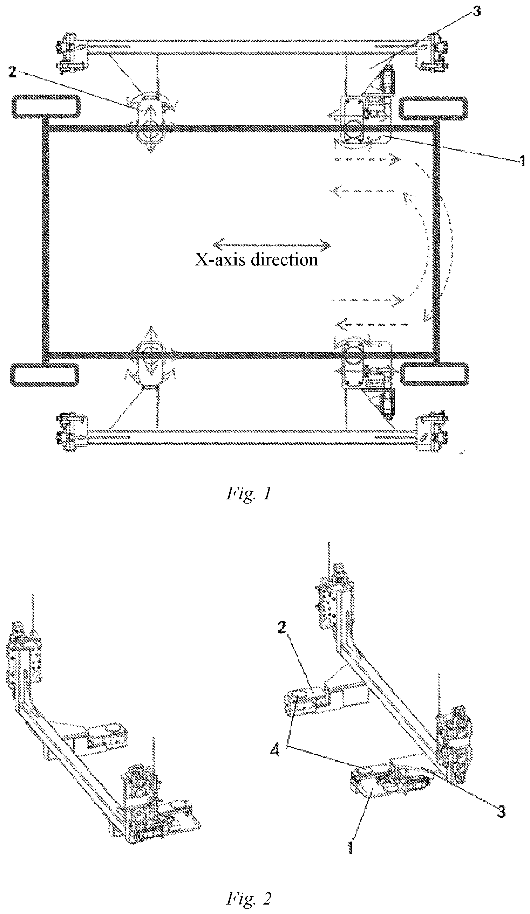

The invention provides a vehicle positioning adjustment device, as shown in Figs. 1 and 2, comprising: an adjustment mechanism 1, a floating mechanism 2, and lifting arms 3 respectively corresponding to the adjustment mechanism 1 and the floating mechanism 2, with a travelling direction being an X-axis direction, wherein the adjustment mechanism 1 is in contact with a first support point of a vehicle at for driving the first support point to move in the X-axis direction so as to drive the vehicle to move; the floating mechanism 2 is in contact with a second support point of the vehicle for floating in a horizontal plane along with the movement of the vehicle so as to adjust the position of the vehicle; and the lifting arms 3 are used to support the corresponding adjustment mechanism 1 and floating mechanism 2.

A plurality of adjustment mechanisms 1 are provided and are respectively arranged on two sides of the vehicle in a vehicle width direction, each of the adjustment mechanisms 1 corresponding to one first support point; a plurality of floating mechanisms 2 are provided and respectively arranged on the two sides of the vehicle in the vehicle width direction, each of the floating mechanisms 2 corresponding to one second support point; and the adjustment mechanism 1 and the floating mechanism 2 disposed on one same side of the vehicle are arranged in the X-axis direction.

The motions of the vehicle include moving forward movement and backward in the X-axis direction and rotating relative to an X direction, which are implemented by controlling the motion of the adjustment mechanism 1. Specifically, in the device, by means of all the adjustment mechanisms 1 moving forward or backward in the X-axis direction, all the first support points are driven to move forward or backward in the X-axis direction so as to drive the vehicle to move forward or backward in the X-axis direction; or
in the device, some of the adjustment mechanisms 1 move forward in the X-axis direction to drive the corresponding first support points to move forward in the X-axis direction, while the other adjustment mechanisms 1 move backward in a vehicle length direction to drive the corresponding first support points to move forward or backward in the X-axis direction, so as to drive the vehicle to rotate relative to the X-axis direction.

In an embodiment shown in Figs. 1 and 2, the device comprises four lifting arms 3, which are distributed in positions corresponding to four corners of the bottom beam of the vehicle for supporting the weight of the vehicle.

The two lifting arms in the front of the vehicle are respectively provided with an adjustment mechanism 1, and the two lifting arms in the rear of the vehicle are respectively provided with a floating mechanism 2. The adjustment mechanism 1 is used to adjust the position of the vehicle in the X-axis direction, as shown in Fig. 1. The floating mechanism 2 is used to float in a horizontal plane according to an adjustment direction of the adjustment mechanism 1, so as to cooperate with the adjustment mechanism 1 to adjust the position of the vehicle.

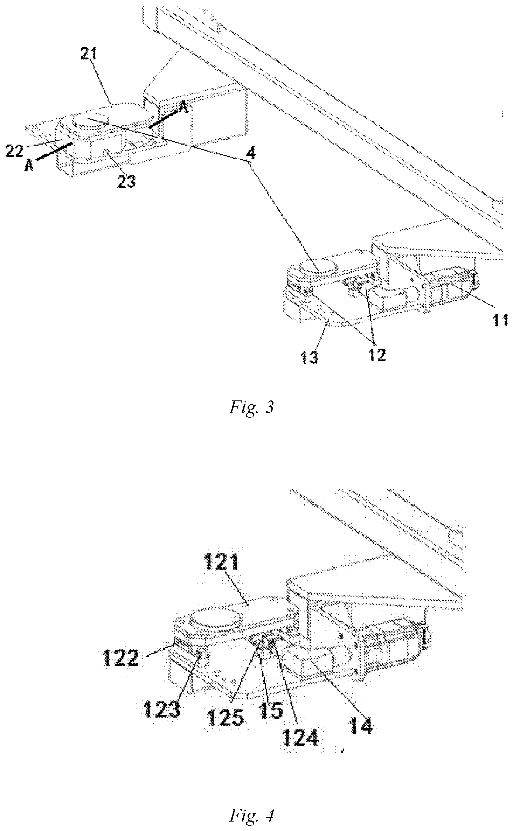

It should be noted that for the device shown in Figs 1 and 2, the two lifting arms in the front of the vehicle are two lifting arms near the front wheels, and the two lifting arms in the rear of the vehicle are two lifting arms near the rear wheels. The lifting arms are bilaterally symmetrical. The floating mechanisms and the floating mechanisms are also disposed symmetrically. The device shown in Figs. 3 and 4 is merely a preferred embodiment. The quantities and setting manners of the adjustment structures 1 and the floating mechanisms 2 are not limited thereto. For example, the adjustment structures 1 are respectively disposed on the two lifting arms in the rear of the vehicle, and the floating mechanisms 2 are respectively disposed on the two lifting arms in the front of the vehicle.

In some examples, as shown in Fig. 3, the adjustment mechanism 1 comprises a driving portion 11, a linear movement portion 12, and a first bottom mounting plate 13, wherein the driving portion 11 and the first bottom mounting plate 13 are disposed on the lifting arms 3, and the linear movement portion 12 is disposed on the first bottom mounting plate 13 and is connected to the driving portion 11; the driving portion 11 is used to drive the linear movement portion 12 to move forward or backward in a linear direction; and The linear movement portion 12 is used to drive the corresponding support point to move forward or backward in the linear direction.

As shown in Fig. 4, the linear movement portion 12 comprises a driving plate 121, a linear guide rail 122, a linear slider 123, a lead screw nut 124, and a lead screw 125, wherein the driving plate 121 is connected to the linear slider 123 and the lead screw nut 124, the lead screw 125 and the linear guide rail 122 are disposed on the first bottom mounting plate 13, and the lead screw 125 is connected to the driving portion 11.

The driving portion 11 drives the lead screw 125 to rotate, the lead screw 125 pushes the lead screw nut 124 to move back and forth, and the lead screw nut 124 drives the driving plate 121 to move back and forth, so as to drive the corresponding support point of the vehicle to move back and forth. Preferably, the lead screw 125 and the driving portion 11 are connected to by means of a coupling 14, and the lead screw 125 is disposed on a corresponding bearing block 15 and is then mounted on the first bottom mounting plate 13.

During the position adjustment of the vehicle, the driving portion 11 drives the lead screw 125 to rotate, the lead screw 125 pushes the lead screw nut 124 to move back and forth, the lead screw nut 124 drives the driving plate 121 to move back and forth, and the linear slider 123 moves along the linear guide rail, so as to adjust the position of the vehicle in the X-axis direction.

The adjustment mechanism 1 further comprises a control module (not shown in the figure) for communicating with the driving portion 11 to output a corresponding position adjustment instruction to the driving portion 11.
the control module comprises: a photographing unit, a computing unit, and a fine adjustment unit, wherein the photographing unit is used to photograph a positioning hole of a vehicle body and a positioning pin of a battery swap trolley to obtain photographic data; the computing unit is used to compute a current position deviation of the vehicle relative to a preset position according to the photographic data, the preset position being a preset battery swap position where the vehicle should be located; and the fine adjustment unit is used to output a corresponding position adjustment instruction to the driving portion 11 according to the obtained position deviation of the vehicle.

The adjustment mechanism 1 shown in Fig. 1 and Fig. 2 is used to illustrate the adjustment process by example. The preset position is used as a reference, and it is assumed that two adjustment mechanisms 1 in the front of the vehicle are respectively a left-side adjustment mechanism and a right-side adjustment mechanism. The photographing unit photographs the vehicle body positioning hole and the positioning pin of the battery swap trolley to obtain photographic data. The computing unit computes the current position deviation of the vehicle with respect to the preset position according to the photographic data, and determines that the vehicle body inclines towards the left-side adjustment mechanism with respect to the preset position. The fine adjustment unit sends a forward-push instruction to a left-side driving portion, and at the same time sends a backward-push instruction to a right-side driving portion, such that the left-side driving portion uses a left-side lead screw nut to drive a left-side driving plate to move forward, and the right-side driving portion uses a right-side lead screw nut to drive a right-side driving plate to move backward. The left-side driving plate drives a left-side support point to move forward. The right-side driving plate drives a right-side support point to move backward. The floating mechanism 2 floats along with the vehicle in the horizontal plane, so as to enable the vehicle body to rotate to the right with respect to the X-axis direction, so as to align the position of the vehicle body. Similarly, if the position of the vehicle is slightly ahead or behind relative to the preset position in the X-axis direction, the leftside adjustment mechanism and the right-side adjustment mechanism are controlled to move forward or backward at the same time to adjust the position of the vehicle. This will be no longer described herein.

In some examples, the driving portion 11 comprises a servo motor.

As shown in Fig. 3, the floating mechanism 2 comprises a floating portion 21, a support portion 22, and a restoring portion 23, wherein the floating portion 21 is in rolling contact with the support portion 22 by means of universal balls 24, such that the floating portion 21 is supported by the support portion 22 to float in the horizontal plane relative to the support portion 22; The universal ball 24 can not only limit the degree of freedom of the floating portion 21 in a vertical direction, but also implement floating of the floating portion 21 in a horizontal direction; and The restoring portion 23 is connected to the floating portion 21 for restoring the floating portion 21.

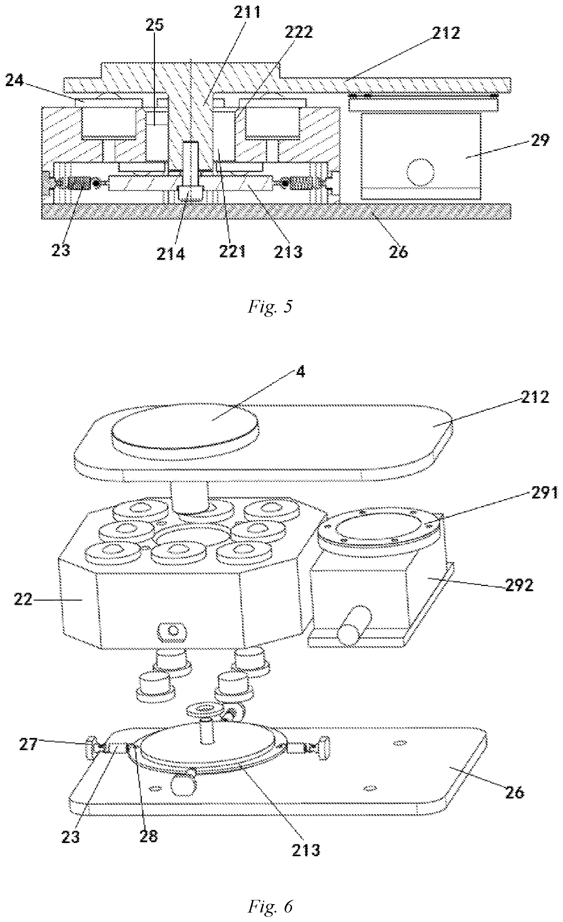

As shown in Figs. 5 and 6, the floating portion 21 comprises a connecting post 211, and a first floating plate 212 and a second floating plate 213 which are respectively connected to two ends of the connecting post 211 and are parallel to each other. The connecting post 211 can limit the floating range of the floating portion 21 and limit the degree of freedom of the floating portion 21 in the vertical direction. Preferably, the connecting post 211 and the first floating plate 212 are of an integrated structure. The connecting post 211 and the second floating plate 213 are fixedly connected, such that the first floating plate 212 and the second floating plate 213 are also fixedly connected, such as being connected through a screw 214. The screw 214 passes through the second floating plate 213 and enters the connecting post 211 to fixedly connect the second floating plate 213 and the connecting post 211. The use of the screw 214 to connect the second floating plate 213 and the connecting post 211 is merely a preferred embodiment. Other method that can fixedly connect the two is also applicable.

The support portion 22 is provided with a through hole 221 for the connecting post 211 to pass through. The first floating plate 212 and the second floating plate 213 are respectively located outside the through hole 221 and is in rolling contact with the support portion 22 by means of the universal ball 24. A floating gap 25 is provided between the connecting post 211 and a through-hole wall 222. At least one of the first floating plate 212 and the second floating plate 213 is provided with the restoring portion 23. In some examples, the connecting post 211 is of a cylindrical structure.

The floating mechanism 2 further comprises a second bottom mounting plate 26, the support portion 22 is fixedly connected to the second bottom mounting plate 26, and one end of the restoring portion 23 is connected to the second bottom mounting plate 26, and the other end thereof is connected to the second floating plate 213. Preferably, three or more restoring portions 23 are disposed on the second floating plate 213 in a circumferential direction, and are uniformly disposed in the circumferential direction of the second floating plate 213. When the position of the vehicle body is adjusted, the adjustment mechanism 1 drives the vehicle body to move, and the vehicle body drives the first floating plate 212 to float. Because the first floating plate 212 is fixedly connected to the second floating plate 213, the second floating plate 213 also floats in the horizontal plane. In this case, the restoring portion 23 is stretched or compressed as the second floating plate 213 floats. After the vehicle body leaves the first floating plate 212, the floating mechanism 2 has no load. All the restoring portions 23 automatically restore, drive the second floating plate 213 to restore in the central position, and can ensure that the floating mechanism 2 has an amount of floating for repeatable positioning.

In an embodiment shown in Figs. 5 and 6, the second bottom mounting plate 26 is provided with a plurality of catching pins 27 in the circumferential direction of the second floating plate 213, the second floating plate 213 is provided with a plurality of catching holes 28 in the circumferential direction, the catching pins 27 correspond to the catching holes 28 on a one-to-one basis, and one end of the restoring portion 23 is connected to the catching pin 27, and the other end thereof is connected to the corresponding catching hole 28.

In some examples, the second floating plate 213 is respectively provided with a catching hole 28 at the front, rear, left, and right in the circumferential direction, and the second bottom mounting plate 26 is provided with four corresponding catching pins 27 in the circumferential direction of the second floating plate 213.

Preferably, the restoring portion 23 is a tension spring. The tension spring is merely a preferred embodiment, but the invention is not limited thereto. Other elastic part that can enable the first floating plate 212 and the second floating plate 213 to restore in the central position may be used herein. The parameters, such as the elasticity coefficient and the length of the tension spring, are set according to the factors such as the bearing capacity of the floating mechanism and the size of the floating mechanism 2.

The floating mechanism 2 further comprises a locking portion 29, which is disposed between the first floating plate 212 and the second bottom mounting plate 26 for tightly locking the floating mechanism 2.

In the embodiment shown in Figs. 5 and 6, the locking portion 29 comprises an electromagnetic brake attraction plate 291 and an attraction plate control portion 292. An upper surface of the electromagnetic brake attraction plate 291 is attracted to or released from the first floating plate 212. The second bottom mounting plate 26 is connected to the attraction plate control portion 292. The attraction plate control portion 292 is powered on or off to enable the electromagnetic brake attraction plate 291 to tightly attract or release the first floating plate 212, so as to lock or release the floating mechanism 2. The structure of the locking portion 29 mentioned above is merely a preferred embodiment, but the invention is not limited thereto. Other locking portions that can fasten the floating mechanism 2 after the position of the vehicle body is adjusted and render the floating portion 21 temporarily unmovable are all applicable.

By means of providing the floating mechanism 2, the number of driving mechanisms 1 can be reduced, the number of the driving portions 21 is thus reduced, the number of electric motors is reduced, and four-point synchronism and coordination are improved. The floating mechanism 2 has a large amount of floating, can bear a heavy load, is restorable, can be locked in position, and can be combined with the adjustment mechanism 1 to adjust the position of the vehicle so as to improve the positioning precision.

In the embodiment of the invention, all positions can be controlled by means of limit switches.

In some examples, a small support surface is further disposed on the driving plate 121 and the first floating plate 212. For example, a support circular surface 4 is configured to support the support points of the vehicle. As such, the contact area can be reduced, and the positioning precision can be improved.

The invention further provides a battery swap system comprising the foregoing vehicle positioning adjustment device. The foregoing vehicle positioning adjustment device is used to adjust a vehicle to an accurate battery swap position.

The embodiments of the invention provide a vehicle positioning adjustment device and a battery swap system comprising the vehicle positioning adjustment device. The device has a simple structure and is easy and convenient to operate. The device can precisely adjust an X-axis position of a vehicle and correct an oblique position of the vehicle body so as to implement automatic battery swap of the battery swap system. In addition, in the device, by means of providing a floating mechanism, the number of electric motors can be reduced, and four-point synchronism and coordination are improved; the floating mechanism has a large amount of floating, can bear a heavy load, is restorable, can be locked in position, and cooperates with an adjustment mechanism to adjust the position of the vehicle so as to improve the vehicle positioning precision, thereby improving the precision and efficiency of battery swapping of the battery swap system.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A vehicle positioning adjustment device, **characterized by** comprising:
an adjustment mechanism and a floating mechanism, with a travelling direction being an X-axis direction, wherein
the adjustment mechanism is in contact with a first support point of a vehicle for driving the first support point to move in the X-axis direction so as to drive the vehicle to move; and
the floating mechanism is in contact with a second support point of the vehicle for floating in a horizontal plane along with the movement of the vehicle so as to adjust the position of the vehicle.

2. The vehicle positioning adjustment device according to claim 1, **characterized in that**
a plurality of adjustment mechanisms are provided and are respectively arranged on two sides of the vehicle in a vehicle width direction, each of the adjustment mechanisms corresponding to one first support point;
a plurality of floating mechanisms are provided and respectively arranged on the two sides of the vehicle in the vehicle width direction, each of the floating mechanisms corresponding to one second support point; and
the adjustment mechanism and the floating mechanism disposed on one same side of the vehicle are arranged in the X-axis direction.

3. The vehicle positioning adjustment device according to claim 1, **characterized in that**
the device further comprises several lifting arms that respectively correspond to the adjustment mechanism and the floating mechanism and support the corresponding adjustment mechanism and floating mechanism.

4. The vehicle positioning adjustment device according to claim 1, **characterized in that**
the adjustment mechanism comprises a driving portion, a linear movement portion, and a first bottom mounting plate, wherein
the driving portion and the first bottom mounting plate are disposed on the lifting arms, and the linear movement portion is disposed on the first bottom mounting plate and is connected to the driving portion;
the driving portion is used to drive the linear movement portion to move forward or backward in a linear direction; and
the linear movement portion is used to drive the corresponding support point to move forward or backward in the linear direction.

5. The vehicle positioning adjustment devices according to claim 4, **characterized in that**
the linear movement portion comprises a driving plate, a linear guide rail, a linear slider, a lead screw nut, and a lead screw, wherein the driving plate is connected to the linear slider and the lead screw nut, the lead screw and the linear guide rail are disposed on the first bottom mounting plate, and the lead screw is connected to the driving portion; and
the driving portion drives the lead screw to rotate, the lead screw pushes the lead screw nut to move back and forth, and the lead screw nut drives the driving plate to move back and forth, so as to drive corresponding support point of the vehicle to move back and forth.

6. The vehicle positioning adjustment device according to claim 1, **characterized in that**
the adjustment mechanism further comprises a control module for communicating with the driving portion to output a corresponding position adjustment instruction to the driving portion.

7. The vehicle positioning adjustment device according to claim 6, **characterized in that**
the control module comprises:
a photographing unit for photographing a positioning hole of a vehicle body and a positioning pin of a battery swap trolley to obtain photographic data;
a computing unit for computing a current position deviation of the vehicle relative to a preset position according to the photographic data; and
a fine adjustment unit for outputting a corresponding position adjustment instruction to the driving portion according to the obtained position deviation of the vehicle.

8. The vehicle positioning adjustment device according to claim 1, **characterized in that**
the floating mechanism comprises:
a floating portion, a support portion, and a restoring portion, wherein
the floating portion is in rolling contact with the support portion by means of universal balls, such that the floating portion is supported by the support portion to float in the horizontal plane relative to the support portion; and
the restoring portion is connected to the floating portion for restoring the floating portion.

9. The vehicle positioning adjustment device according to claim 8, **characterized in that**
the floating portion comprises a connecting post, and a first floating plate and a second floating plate which are respectively connected to two ends of the connecting post and are parallel to each other;
the support portion is provided with a through hole for the connecting post to pass through, the first floating plate and the second floating plate are respectively located outside the through hole and are in rolling contact with the support portion by means of the universal balls, and a floating gap is provided between the connecting post and a through-hole wall; and
at least one of the first floating plate and the second floating plate is provided with the restoring portion.

10. The vehicle positioning adjustment device according to claim 9, **characterized in that**
the floating mechanism further comprises a second bottom mounting plate, the support portion is fixedly connected to the second bottom mounting plate, and one end of the restoring portion is connected to the second bottom mounting plate, and the other end thereof is connected to the first floating plate.

11. The vehicle positioning adjustment device according to claim 10, **characterized in that**
the second bottom mounting plate is provided with a plurality of catching pin in a circumferential direction of the second floating plate, the second floating plate is provided with a plurality of catching holes in the circumferential direction, the catching pins correspond to the catching holes on a one-to-one basis, and one end of the restoring portion is connected to the catching pin, and the other end thereof is connected to the corresponding catching hole.

12. The vehicle positioning adjustment device according to claim 8, **characterized in that**
the floating mechanism further comprises a locking portion, which is disposed between the first floating plate and the second bottom mounting plate for tightly locking the floating mechanism.

13. A battery swap system, **characterized by** comprising the vehicle positioning adjustment device according to any one of claims 1-12.
